# EUROPEAN PATENT APPLICATION

(11) **EP 1 592 260 A2**
(43) Date of publication of application: **02.11.2005**
(21) Application number: 05005605.0
(22) Date of filing: 15.03.2005
(51) Int. Cl.: H04N 9/31

(54) **Scanning display system**

(30) Priority: 14.04.2004 US 824082
(71) Applicant: Hewlett-Packard Development Company, L.P., Houston, Texas 77070 (US)
(72) Inventor: Myers, Timothy F., Philomath OR 97370 (US); Childers, Winthrop D., San Diego CA 92127 (US)
(74) Representative: Schoppe, Fritz

(57) **Abstract**

A display system (100) includes a light source (102) and a spatial light modulator (104) configured to receive the light from the light source (102). The spatial light modulator (104) modulates and selectively transmits selected spatial colors in sets of partial images to a scanning device (106). The scanning device (106) receives the sets of partial images and scans the sets of partial images to create a full-frame color image.

## Description

### BACKGROUND OF THE INVENTION

Image projection systems may be used to display still or video images. Conventional projection engines typically modulate red, green and blue (RGB) light to generate a projected image. The RGB light may be derived from a white light source. For example, a Digital Light Processing (DLP) system consists of a white light source focused through a color wheel, separating the light, and directing the light onto a spatial light modulator (SLM) chip. The spatial light modulator orients the transmissive or reflective elements to form an image. The image is then transmitted to a projector lens and onto a viewing display. The color wheel is typically a rapidly rotating color filter wheel interposed between the light source and an image-forming element. The color wheel typically includes segments having different light-filtering properties. The segments may have, for example, segments corresponding to red, green and blue transmissive filters. As the color wheel is rapidly rotated, RGB colored light may be sequentially projected onto the image-forming element.

While the use of such color wheels effectively yields the desired RGB light for image formation, it does so by blocking the transmission of undesired light wavelengths. Thus, in order to produce colored light, a significant portion of the light from the white light source is blocked. This results in a decreased light output of the light engine, relative to the output of the white light source itself. Some color wheels have an added white segment to regain some of the lost white light. Others have tried to improve the loss of light by producing a six-segmented color wheel that eliminates the white segment, offering a richer display of color. Furthermore, the use of a color filter wheel may require that the wheel be rotated at high speeds, for example 7500 revolutions per minute (RPM) with high precision. A disadvantage to the rapidly rotating color wheel is the emitting of sequential color on a viewing display. The emitting of sequential color creates a unique visible artifact on the viewing screen, also known as "rainbow effect." The "rainbow effect," while visible only to some people, is the separation of the RGB spectrum, thus portraying distinct colors of red, green, and blue. The rotation of the color wheels has increased, thus attempting to eliminate the rainbow artifact. The increased rotation contributes to color filter wheels being expensive, delicate and experiencing increased noise generated from its operation.

There are many spatial light modulators being developed today, including a digital micro-mirror device (DMD), grating light valve (GLV), diffractive light device (DLD) and liquid crystal on silicon (LCOS). Of these, some use multiple metal ribbon-like structures that are attached to a silicon chip. The ribbon structure represents a particular "image point" or pixel. The ribbons are moved tiny distances, changing the wavelength of reflected light, to produce the desired wavelength or color of light. When all of the ribbon structures are taken as a whole, they create a desired image. This image can then be transmitted onto a viewing screen. While some spatial light modulators use ribbon-like structures, others, such as a DMD, use thousands of tiny mirrors, in which each tiny mirror represents a single pixel on a viewing area.

When using a DMD chip, the light source is directed onto the DMD chip. The tiny mirrors are oriented to direct the light either into the path of the projector lens to turn the pixel on, or away from the projector lens path to turn it off. Tilting the mirrors away from or into the projector lens path is based upon how much of each color is required for each pixel at any given moment in time. This activity modulates the light and produces the image that is projected onto the viewing surface. Known issues with this type of spatial light modulating device are "dead pixels" or "missing pixels". The issue of "dead pixels" occurs when particular mirrors are stuck or become inoperative. This undesirable "dead pixel" phenomenon creates black dots on an all white background.

Current projectors use a variety of SLMs, i.e. GLV, DMD, LYCOS, etc. The SLMs have limited bandwidth and implement complex control electronics to process and receive the different colors of light, from a color wheel, in order to generate an image. The limited bandwidth places constraints on the demand to create high quality images.

The demand for high quality and high-resolution projectors has played an important part on the research and development of high-end projectors. The current method to provide projectors with high resolution is to increase the SLM chip size. The increased size of the SLM chip increases the full-frame image resolution by increasing the number of pixels of the system, therefore providing a higher quality picture. The larger SLM chip, however, results in an increased price for the projector.

For the foregoing reasons, there is a need for a projection system or method that transmits a high quality image onto the viewing screen with an increase of light and color saturation while reducing the "missing pixel" effect, and reducing the area used on a spatial light modulator chip.

### SUMMARY OF THE INVENTION

According to one aspect of the present invention, a display system includes a light source and a spatial light modulator configured to receive the light from the light source. The spatial light modulator modulates and transmits selected spatial colors in sets of partial images to a scanning device. The scanning device receives the sets of partial images and scans the sets of partial images to create a full-frame color image.

Additional features and advantages of the invention will be apparent from the detailed description which follows, taken in conjunction with the accompanying drawings, which together illustrate, by way of example, features of embodiments of the present invention.

### BRIEF DESCRIPTION OF THE DRAWINGS

The following drawings illustrate exemplary embodiments for carrying out the invention. Like reference numerals refer to like parts in different views or embodiments of the present invention in the drawings.
FIG. 1 is a block diagram of an embodiment of a projector according to the present invention.
FIG. 2 is a block diagram of another embodiment of a projector according to the present invention.
FIG. 3 is a block diagram of another embodiment of a projector according to the present invention.
FIG. 4 is a flow diagram illustrating an exemplary method according to the present invention for projecting a color image onto a screen.
FIG. 5 is a view of a partial image being scanned into a full-frame image with exemplary timing in accordance with an embodiment of the invention.
FIG. 6 is a flow diagram illustrating an exemplary method for manufacturing a projector.

### DETAILED DESCRIPTION

Reference will now be made to the exemplary embodiments illustrated in the drawings, and specific language will be used herein to describe the same. It will nevertheless be understood that no limitation of the scope of the invention is thereby intended. Alterations and further modifications of the inventive features illustrated herein, and additional applications of the principles of the inventions as illustrated herein, which would occur to one skilled in the relevant art and having possession of this disclosure, are to be considered within the scope of the invention.

In general, the present invention includes a spectrally and spatially separated light source covering portions of the visible spectrum; a spatial light modulator for selectively transmitting component colors of a set of partial images from the spectrally and spatially separated light; and a scanning or scrolling mechanism for sweeping the component colors across a viewing area to create a full-frame color image. Each of these components and their associated functions is discussed in detail below.

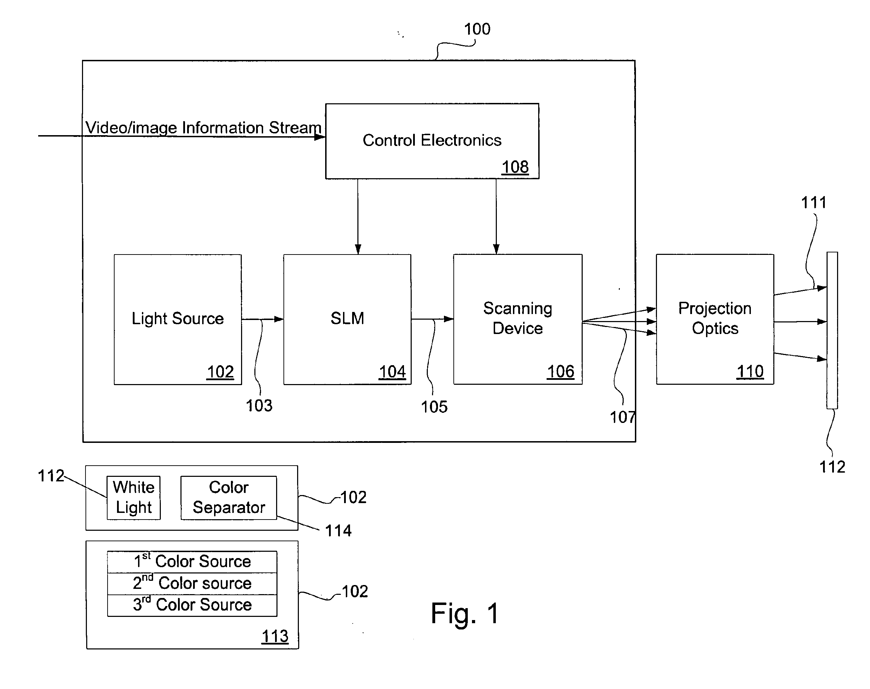

FIG. 1 is a block diagram of an embodiment of a display system 100 consistent with the present invention. Display system 100 in one embodiment is a frontal projection system. In another embodiment, display system 100 is a rear projection system. In yet another embodiment, display system 100 can be viewed directly as an imageable display. Display system 100 may include a light source 102 of spectrally and spatially separated light 103 optically connected to a spatial light modulator (SLM) 104 to create selected spatial colors, which create a partial image 105 of a final full-frame color image. SLM 104 is optically connected to scanning device 106 that scans or otherwise sweeps the selected spatial colors of partial images 105 to create the full-frame color image 107 on viewing area 115.

Display system 100 may further include projection optics 110 optically connected to the scanning device 106. Projection optics 110 may be configured to receive and project the full-frame color image 107 onto a viewing area 115 as an enlarged full-frame image 111. Projection optics 110 may include one or more mirrors, lenses or other optical components used to focus the image. Particular configurations of projection optics and the components selected suitable for use with display system 100 are within the knowledge of one skilled in the art and, thus, will not be further elaborated on herein. The viewing area 115 may be front or rear illuminated to create either a projected or a displayed image.

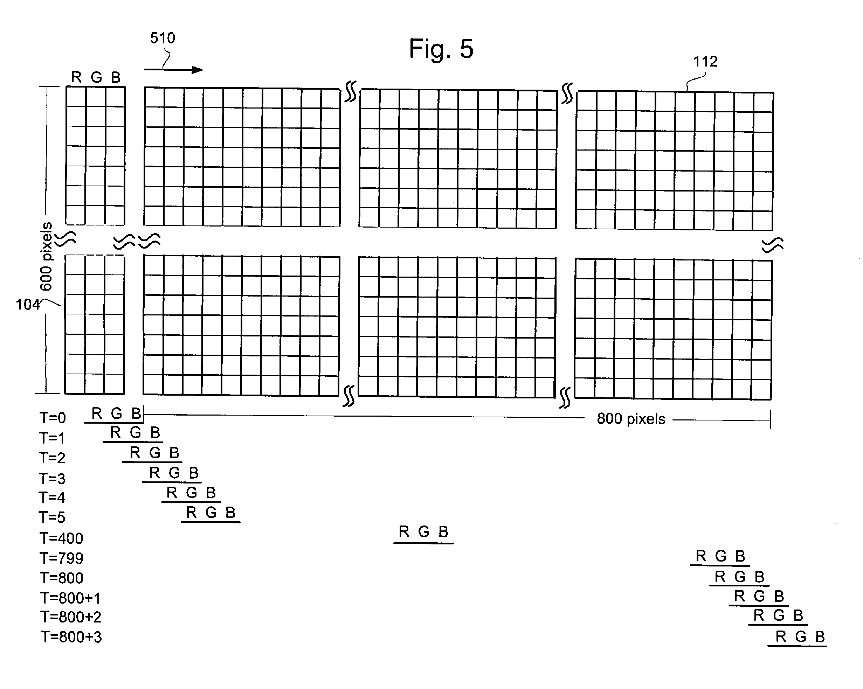

Scanning device 106 may be configured to receive the spatially modulated light separated into component colors as a set of partial images 105 and scan the received light to generate a full-frame color image 107 from the set of partial images 105 that overlap (see Fig. 5).

The source of spectrally and spatially separated light 102 may include a white light source 112 optically connected to a color separator 114 for physically separating the balanced white light into spectrally and spatially separated light according to an embodiment of the present invention. Alternatively, the spectrally and spatially separated light 102 may include multiple spectral light sources 113 such as light emitting diodes, lasers, etc. White light source 112 may be configured for generating white light (using one or more light sources) covering the visible spectrum that provides a full-saturated color gamut when separated into constituent colors. Generally, the white light source is substantially balanced (uniform in spectral intensity). White light source 112 may be any one of a number of white light sources, e.g., a metal halide lamp, a xenon lamp, a halogen lamp, a mercury vapor lamp, a plasma lamp, an incandescent lamp and any other white light source consistent with embodiments of the present invention. Color separator 114 may be configured as a prism, a prism array, or any other color separator that does not intentionally sequence or otherwise substantially temporally separate colors during spectral and spatial separation according to embodiments of the present invention. Many such color separators are known to those of skill in the art and include: prisms, dichroic filters, Rugate filters, and diffractive optics to just name a few.

SLM 104 may be configured to receive the spectrally and spatially separated light 103 and generate spatially modulated light in the form of partial images 105. SLM 104 may be configured with at least one of a digital micro-mirror device (DMD), a grating light valve (GLV), a diffractive light device (DLD) and a liquid crystal on silicon (LCOS) (to just name a few; other are known to those of skill in the art and can be substituted) according to embodiments of the present invention. SLM 104 may be an image-forming element having an array of display elements, located on the surface of the SLM chip, equal to the resolution of the full-frame image according to an embodiment of the present invention. For example, SLM 104 may comprise a DMD having an array of digital micro-mirrors, forming the DMD surface, each of which corresponds to a pixel location in the full-frame image. In one embodiment, SLM 104 may have the same number of pixels as the final full-frame image. This is not necessary, however. According to one embodiment, SLM 104 is sized to have an array of pixels that is less than the total number of pixels displayed in the final full-frame image. For instance, if the full-frame image is 800 x 600 pixels, SLM 104 may be 96 x 600 pixels. This selection would allow for 32 pixels for each of three primary colors and would span across the full height of the final image. Another selection would be 48 x 300 pixels allowing for 16 pixels per primary color and scanning the SLM 104 twice at two different heights to create the final full-frame color image 107. By combining the set of partial images 105 in an overlapped fashion, the scanning device 106 enables the formation of a total full-frame image. In other words, the set of partial images 105 of spectrally and spatially separated color are scanned by scanning device 106 over a viewing area 115 and the subsequent overlapping of the set of partial images 105 forms the full frame color image 107.

SLM 104 functions to generate an image for transmission across a viewing surface by modulating the generated color spots or pixels of the set of partial images 105. In one embodiment, modulating is performed by pulse modulation over time by turning on and off the generated color spots. Turning on and off the generated color spots is accomplished by turning on and off the corresponding pixel elements of the SLM. Other embodiments may modulate the generated color spots by amplitude, phase, polarization, diffractive, or frequency (such as by filtering) modulation.

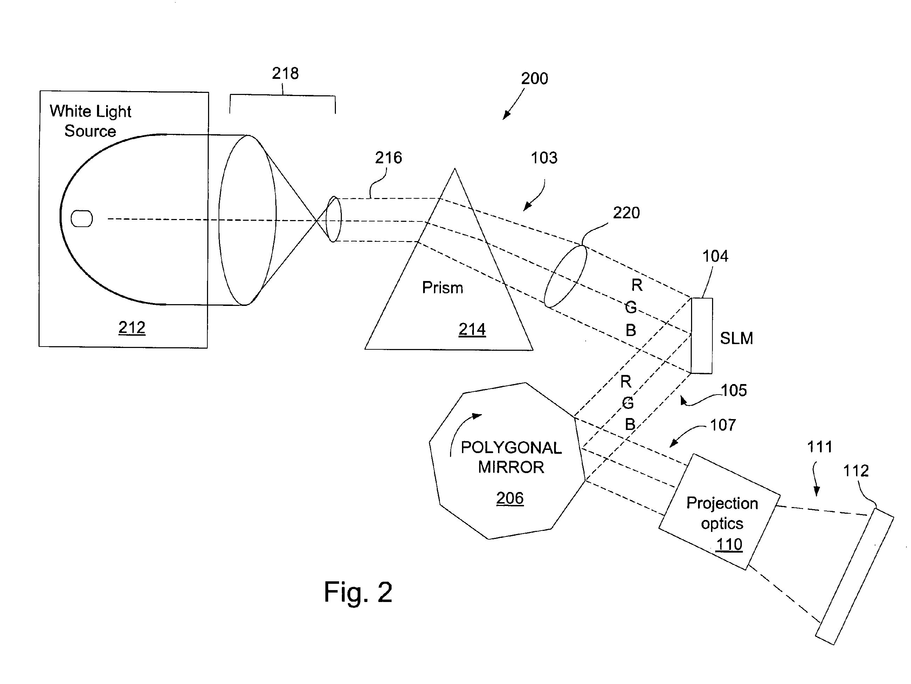

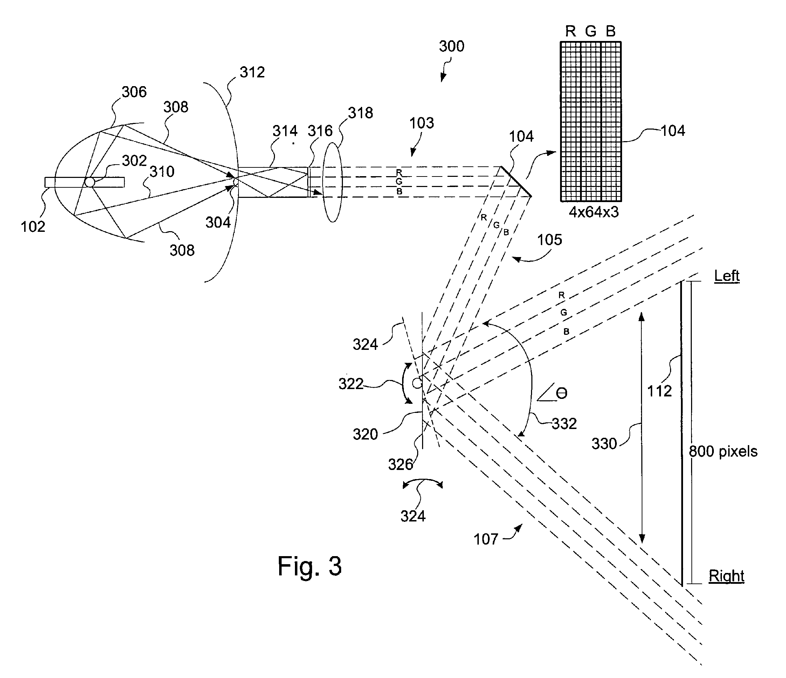

Scanning device 106 in one embodiment may be configured as a polygonal mirror 206 (see Fig. 2) spinning about an axis to sweep the spatially modulated light from the SLM 104. The term "spinning" may encompass non-uniform advancement of the mirror in one direction such as in a cogwheel fashion, or in discrete steps as with a stepper motor. The polygonal mirror 206 may comprise any number of facets and is not limited to the eight shown in FIG. 2 (octagonal polygonal mirror). Alternatively, the scanning device 106 may be configured as a pivoting mirror (see Fig. 3) that can rotate back and forth over a range of angles such as with a galvanometer mirror. By having a pivoting mirror, the partial images may be scanned across the viewing area 115 in two opposite directions such as left to right and right to left; or top to bottom and bottom to top; or both, if multi-axial. In addition, the scanning device can include more than one scanning element to allow for scanning in both horizontal and vertical directions.

Display system 100 may further include control electronics 108 for receiving video and/or image information streams from one or more sources in one or more of 3D or 2D formats. Control electronics 108 is configured to synchronously control the SLM 104 and the scanning device 106 to generate the color image. Control electronics 108 may include fixed logic, programmable logic, microprocessors, firmware, software or various combinations thereof. Control electronics 108 may be used to control individual display elements (pixels) of SLM 104 according to the input video or image information to modulate the received light. Control electronics 108 may be configured to control an SLM with stationary segmented color areas on the image forming elements of the SLM chip in synchronization with the scanning device 106. In one embodiment, control electronics 108 may be configured to turn the individual display elements of the SLM 104 on and off in order to form an image. Because the separated colors may be swept across a viewing area 115 using multiple SLM pixel elements to cover a pixel area of the final image, the display system 100 is capable of hiding errors generated, for example, due to missing, stuck, or faulty pixels such as defective mirror elements in a DMD embodiment of an SLM 104. Defective pixels may also be compensated for by other working SLM pixel elements in the control electronics 108, thus allowing for increasing the yield of DMD devices. Because embodiments of the invention allow for the use of DMD devices that have defective pixel elements, some devices that would normally be rejected can be used. This effectively increases the yield of the DMD manufacturing process and thus lowers the cost of the display system.

Additionally, the saturated color intensity of display system 100 may be up to 200% greater than conventional DMD or other SLM systems incorporating an identical white light source 212 and that uses a color filter wheel for sequential color separation. This increase in intensity is due to the color generation no longer being sequentially generated, but rather the colors are simultaneously generated, modulated, and swept across the viewing area 115. Thus, generally at least three primary colors are used at one time during most of the image generation (except at the image boundaries) rather than being sequentially presented, as occurs with color wheel systems, to the viewer at substantially 1/3 of the output of a light source. Color space systems other than primary colors can be used and still fall within the scope of the invention and are known to those of skill in the art.

FIG. 2 is a block diagram of one embodiment of display system 100 in the form of a projector 200 according to the present invention. Projector 200 may include a white light source 212, a prism 214, an SLM 104 (as described above), and a polygonal mirror 206, all configured along an optical path 216 (dotted line). Projector 200 may further include projection optics 110, as described above. Projector 200 may further include concentrating optics 218 and/or collimating optics 220 and any other suitable combination of mirrors, integrating rods, lenses, and other optical components, such as IR and UV filters (not shown for clarity) for directing and shaping the light along the optical path 216.

According to projector 200, white light is generated by a white light source 212. Xenon, for example, provides a very balanced white light and hence allows for a full and saturated color gamut. The generated white light may be concentrated by concentrating optics 218 to enter prism 214. Upon generation, the white light is then spectrally and spatially separated by prism 214. The spectrally and spatially separated light 103 may include constituent colors covering the visible spectrum from red to violet with weighting dependent upon the particular white light source 212 properties. The spectrally and spatially separated light 103 exits the prism with red on one portion of the beam and blue or violet at the opposite portion. This spectrally and spatially separated light 103 then impinges and bathes the surface of an SLM 104. For example in one orientation, a left portion or segment of the SLM is always bathed in red light, a central portion or segment is always bathed in green light, and a right portion or segment is always bathed in blue light. Thus, the multiple colors form a stationary pattern on the SLM 104. Of course, there may be violet, orange, and other colored pixels near the RGB primaries to make up the full spectrum of light or full gamut of colors, as indicated. If desired the non-primary components can be filtered or otherwise eliminated to simplify the creation of a final image.

In one exemplary embodiment, SLM 104 includes a reflective SLM, such as a micro-mirror-type chip SLM. As the spectrally and spatially separated light impinges and bathes the surface of the reflective SLM, the light from the SLM (the set of partial images 105) is then passed onto polygonal mirror 206 comprising a plurality of facets. The polygonal mirror facets are rotating, thus causing each colored pixel to move across the viewing area 115 from top to bottom or from side to side depending on the orientation of the polygonal mirror in respect to the SLM. The polygonal mirror speed is adjustable so that the full spectrum of colors may be seen at every location of the viewing area in at least every frame. For an embodiment that has a frame rate of 60 frames per second, a polygonal mirror 206 is spun to comprise a facet frequency of 60 Hz. If the mirror had 10 facets, the mirror spin frequency would be 6 Hz. For example, the polygonal mirror 206 may be rotated by a linear or stepper type motor. Polygonal mirror 206 further functions to reflect and pass the full-frame color image 107 into projection optics 110, which in turn images the enlarged full-frame image 111 across (onto or into) the viewing area 115.

In another exemplary embodiment of the present invention, SLM 104 may comprise a transmissive-type configuration, or a partial-mirror configuration. The geometry of the optical path and the necessary folding (or unfolding) and concentrating optics would be different than that shown in FIG. 2, but are within the knowledge of one of ordinary skill in the art in possession of this disclosure and will not be further elaborated on herein.

Fig. 3 is an illustration of an alternative embodiment of display system 100 in the form of a projector 300. This embodiment illustrates alternative devices for the different components of display system 100. A light source 102 uses a highpressure metal halide bulb that creates a fireball at a first focal point 302 of an elliptical reflector 306. The emitted light 308 is reflected off the reflector 306 to a second focal point 304 that is positioned at the input of an integrating rod 314. A retro-reflector 312 is used to capture stray light from the light source 102 and reflects it back to the elliptical reflector 306 to be further directed to the entrance of the integrating rod 314.

The integrating rod 314 is used to harmonize the light and make it uniform in intensity over its output surface. The integrating rod 314 is also used generally to shape the light to match the aspect ratio of the SLM 104 to prevent overflow of the light beyond the SLM 104 edges, thus maximizing the light intensity. At the exit of the integrating rod 314 is an array of dichroic filters, which create a red (R), green (G), and blue (B) pattern that is spectrally and spatially separated light. Dichroic filters are used to allow specific light frequencies to pass through the filter while light of different frequencies is reflected back. This reflected light 310 returns to the elliptical reflector 306, is reflected, and then returned to the entrance of the integrating rod 314. If it strikes a dichroic filter of the same wavelength, then it is allowed to pass. Thus, the light is recycled and most of the light emitted from the light source 102 is allowed to pass the set of dichroic filters 316. The spectrally and spatially separated light 103 is then collected with imaging optics 318 so as to image the light onto the spatial light modulator 104.

In an alternative embodiment, the set of dichroic filters 316 can be optionally eliminated and a diffractive light device (DLD) used for SLM 104. Each pixel element of the DLD-based SLM 104 is basically a Fabry-Perot type interferometer that can be enabled or disabled to selectively filter the incoming light to a color based on the cavity spacing.

The exemplary spatial light modulator 104 in Fig. 3 is shown as a 4-pixel by 64-pixel by 3-segment modulator in a frontal view for reference. Different aspect ratios and pixels dimensions can be chosen. In this example, assuming an 800 by 640 desired full-frame color image, each pixel on the final image would have at least 4 pixels of each color swept across the pixel location to hide defects.

The light from the SLM 104 is swept by pivoting mirror 320 in two orthogonal directions. The first axis 322 is used to sweep or scan the partial image 105 from SLM 104 from left to right of the viewing area 115 in a first direction. The partial image 105 can then be swept back from right to left of the viewing area 115 as shown by scanning direction 330. Note that the scan begins and ends with the light outside of the boundaries of the viewing area 115. The partial images are scanned through an angle of rotation 332 by having the pivoting mirror 320 move between a first position 324 and a second position 326. At the end of a scan on either end, the pivoting mirror can be rotated about a second axis, such as axis 324, to scan the partial image 105 in a second direction. Alternatively, the SLM 104 can be designed to have pixels in one direction that match the resolution of the final image in one axis so only a single scan per full-frame color image 107 is required along first axis 322.

There are several advantages realized by the present invention. First, errors in image generation may be hidden, such as errors caused by missing or faulty SLM pixel elements such as defective mirror elements in a DMD SLM system. Second, the SLM and scanning device may provide a more simplified control electronics configuration as each SLM pixel has a fixed color. Third, there is a significant boost in saturated color intensity over conventional display systems. Fourth, as compared to color wheel display systems, the saturated light boost may enable the use of Xenon light sources that have less output per input watt and larger fireballs than mercury-based light sources, thus providing a balanced white light which allows a full saturated color gamut. Fifth, embodiments of the display system are less expensive to build and operate as compared to three-chip SLM systems (where each SLM uses a single primary color to increase efficiency), thus allowing the system to be implemented in lower-priced projectors. Sixth, as compared to such an LCD based SLM display system, there is an increase or boost in saturated light, as well as a simplified optical path, because polarization of the light is not required. Seventh, there is no need for an expensive high-speed color wheel and a corresponding expensive point light source. These advantages are not meant to be all-inclusive as one ordinarily skilled in the art may realize other advantages.

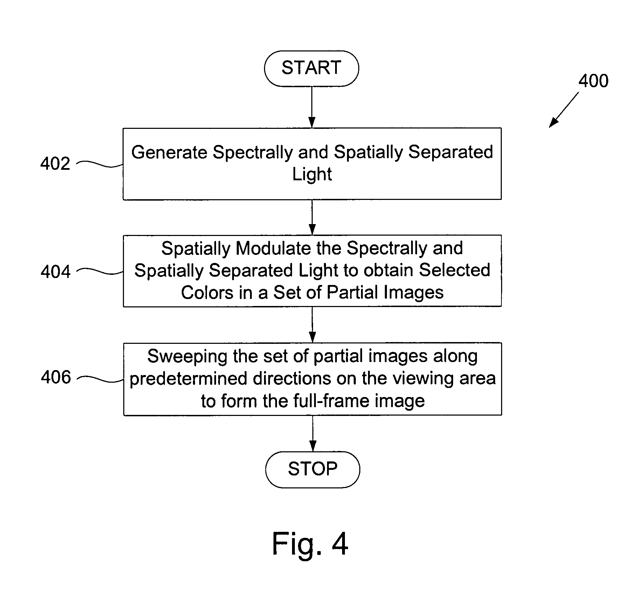

With reference to FIG. 4, the present invention further includes a method 400 for projecting a color image onto a viewing area 115. Method 400 includes step 402, generating spectrally and spatially separated light 103 simultaneously; step 404, spatially modulating the spectrally and spatially separated light to obtain selected colors in a set of partial images 105; and step 406, sweeping (scanning) the selected colors along predetermined directions on the viewing area 115 to form the full-frame color image 107. These method steps are performed utilizing the basic components described above in Fig. 1.

In an exemplary embodiment, step 404 for spatially modulating the spectrally and spatially separated light does not substantially temporally separate the light, as occurs with color wheel systems. Different colors may have slightly different speeds through the various mediums within the light path and thus may be slightly delayed from one another. However, this effect would not be noticeable to the viewer and any temporal separation is both insubstantial and unintentional. In other words, step 404 does not intentionally sequentially process (separate) the colors of the light into different time intervals.

Fig. 5 is an illustration of the full-frame final image on the viewing area 115 and the timing of an SLM 104 that is scanned in a direction 510. The SLM 104 is shown as having 3 by 600 pixels for sake of clarity in describing the scanning operation. The final image is shown as 800 by 600 pixels. Beneath the image is a chart representing the timing of the position of the partial images color planes with respect to the pixel locations of the viewing area 115. At T=0, the scanning device positions the partial image of the SLM outside of the viewing area. At T=1, the first column of the viewing area 115 is illuminated with a blue portion of the partial image that corresponds to the blue portion of the final image for the first column. At T=2, the first column is illuminated with the green portion of the partial image which corresponds with the green portion of the final image for the first column. In addition, the blue portion of the second column of the final image is illuminated with a partial image that corresponds to the blue portion of the final image in the second column. At T=3, the scanning device advances to illuminate the first, second, and third columns of the final image with, respectively, a red, green, and blue partial image that contain the modulated data for those colors for the respective final image columns. The SLM partial images continue to be scanned and overlap to create the final image on the viewing area 115 until at T=800+3, the RGB partial image is off. The final image and a new scan can begin, either at the first column of the final image (as with a polygonal mirror) or at the last column of the final image (as with a pivoting mirror). Because of the scanning of the SLM 104 partial image outside of the final image frame, these portions would be modulated off although the SLM 104 is illuminated with the spectrally and spatially separated light 103. Therefore, an efficient design would minimize the width of the SLM 104 to that required for a particular purpose, such as by using 4 pixels per color to allow for the correction of pixel defects. The smallest array size for SLM 104 will be limited by its ability to modulate the pixels for a desired color depth of resolution in the final full-frame color image. For instance, with a DMD SLM 104, the smallest array size would be limited by the frequency by which the mirrors can toggle on and off effectively.

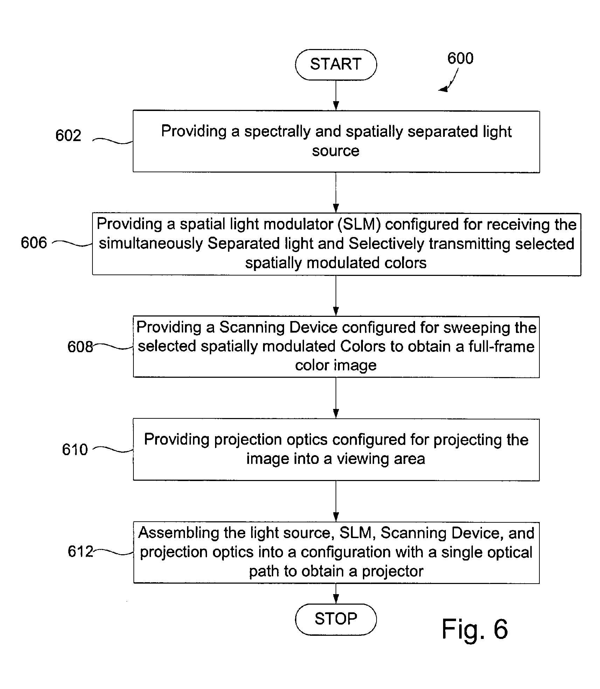

With reference to Fig. 6, the present invention further includes a method 600 of manufacturing a projector. Method 600 includes step 602 that provides a light source 102 configured for generating spectrally and spatially separated light 103 into simultaneously separated light. Step 606 provides a spatial light modulator (SLM) 104 configured to receive the simultaneously separated light and selectively transmits the selected spatially modulated colors in the form of a set of partial images 105. Step 608 provides a scanning device configured to sweep the selected spatially modulated colors to obtain a full-frame color image 107. Step 610 provides projection optics configured to project the full-frame color image 107 across a viewing area 115. Step 612 assembles the light source 102, SLM 104, scanning device 106 and projection optics 110 in a configuration with a single optical path to obtain a projector or display device.

It is to be understood that the above-referenced arrangements are illustrative of the application for the principles of the present invention. Numerous modifications and alternative arrangements can be devised without departing from the spirit and scope of the present invention while the present invention has been shown in the drawings and described above in connection with the exemplary embodiments of the invention. For example, multiple bands of color, such as RGBRGBRGB, could be imaged using multiple optical paths onto an SLM that would then be scanned to form the final image. It will be apparent to those of ordinary skill in the art that numerous modifications can be made without departing from the principles and concepts of the invention as set forth in the claims.

## Claims

1. A display system (100), comprising:
at least one light source (102) configured to provide spectrally and spatially separated light;
a spatial light modulator (104) configured to receive the spectrally and spatially separated light and to modulate and selectively transmit selected spatial colors from the light source (102) to form a set of partial images; and
at least one scanning device (106) configured to receive the set of partial images and to scan the set of partial images across a viewing area (115) to create a full-frame color image.

2. The display system (100) of claim 1, further comprising at least one projection optic (110) interposed between the scanning device (106) and the viewing area (115), wherein the projection optic (110) is configured to receive and project the full-frame color image onto a viewing area (115).

3. The display system (100) of claim 1, wherein the at least one light source (102) includes:
at least one white light source (112); and
at least one color separator (114).

4. The display system (100) according to claim 1, wherein the at least one light source (102) includes a plurality of light sources (113), each configured to deliver, simultaneously, a different colored light to the spatial light modulator (104).

5. The display system (100) of claim 1, wherein the at least one scanning device (106) includes a pivoting mirror.

6. The display system (100) according to claim 1, further comprising control electronics (108) in communication with the spatial light modulator (104) and the scanning device (106) and configured for receiving video or image information and synchronously controlling the spatial light modulator (104) and the scanning device (106) to generate the full-frame color image.

7. The display system (100) according to claim 1, wherein the spatial light modulator (104) includes an image-forming element having an array of display elements less than a resolution of the full-frame image.

8. The display system (100) according to claim 1, wherein the scanning device scans (106) in multiple directions.

9. The display system (100) according to claim 1, wherein the at least one light source (102) includes an array of dichroic filters.

10. A method of manufacturing a display system (100), comprising:
providing at least one light source (102) configured for generating and transmitting spectrally and spatially separating light;
providing a spatial light modulator (104) configured for receiving the spectrally and separated light and selectively transmitting selected spatial colors from the light source (102) to form a set of partial images;
providing at least one scanning device (106) configured for receiving and sweeping the set of partial images to obtain a full-frame color image;
providing projection optics (110) configured for projecting the full-frame color image into a viewing area (115); and
assembling the light source (102), spatial light modulator (104), scanning optics (106) and projection optics (110) in a configuration to obtain a display system.
